# EUROPÄISCHE PATENTSCHRIFT

(11) **EP 2 951 901 B1**
(45) Veröffentlichungstag und Bekanntmachung des Hinweises auf die Patenterteilung: **21.03.2018**
(21) Anmeldenummer: 14702554.8
(22) Anmeldetag: 31.01.2014
(51) Int. Cl.: H02H 3/05, H02H 3/20, H02H 7/12, H02H 9/04

(54) **SICHERHEITSSCHALTVORRICHTUNG MIT SICHEREM NETZTEIL**
SAFETY SWITCHING DEVICE WITH A SAFE POWER SUPPLY UNIT
DISPOSITIF DE COMMUTATION DE SÉCURITÉ À ALIMENTATION SÉCURISÉE

(30) Priorität: 01.02.2013 DE 102013101050
(43) Veröffentlichungstag der Anmeldung: 09.12.2015
(73) Patentinhaber: Pilz GmbH & Co. KG, 73760 Ostfildern (DE)
(72) Erfinder: RICHTER, Sebastian, 76646 Bruchsal (DE); LE, Kim, 73760 Ostfildern (DE); RÖHMANN, Stefan, 73760 Ostfildern (DE)
(74) Vertreter: Witte, Weller & Partner Patentanwälte mbB
(86) Internationale Anmeldenummer: PCT/EP2014/051883
(87) Internationale Veröffentlichungsnummer: WO 2014/118316

(56) Entgegenhaltungen:
- EP-A1- 1 102 379
- DE-A1-102005 024 321

## Beschreibung

Die vorliegende Erfindung betrifft eine Sicherheitsschaltvorrichtung zum fehlersicheren Ein- oder Ausschalten einer technischen Anlage, mit einem Eingang zum Aufnehmen eines Eingangssignals, mit einer fehlersicheren Steuer/Auswerteeinheit, die das Eingangssignal verarbeitet, um in Abhängigkeit davon ein Ausgangssignal zum Ein- und Ausschalten der technischen Anlage zu erzeugen, mit einem Netzteil mit einem Masseanschluss zum Bereitstellen zumindest einer Betriebsspannung für die Steuer/Auswerteeinheit, wobei das Netzteil über eine Zuleitung eine Eingangsspannung aufnimmt und ausgangsseitig eine definierte Ausgangsspannung bereitstellt.

Eine Sicherheitsschaltvorrichtung dieser Art ist beispielsweise aus DE 10 2006 004 558 A1 bekannt.

Eine Sicherheitsschaltvorrichtung bzw. eine fehlersichere Steuer/Auswerteeinheit im Sinne der vorliegenden Erfindung ist eine Schaltvorrichtung bzw. Steuer/ Auswerteeinheit, die zumindest ein PL d (performance level) nach der Norm
EN ISO 13849-1 und/oder ein SIL 2 (safety integrity level) nach EN/IEC 62061 erfüllt. Hierunter fallen insbesondere Schaltgeräte, Sicherheitssteuerungen sowie Sensor- und Aktuatormodule, die für die Steuerung und Durchführung von sicherheitskritischen Aufgaben im Bereich industrieller Produktionsumgebung eingesetzt werden. Dabei sind insbesondere Schaltgeräte bekannt, die die Betriebsstellung eines Not-Aus-Schalters oder einer Schutztür oder beispielsweise den Funktionszustand einer Lichtschranke überwachen und in Abhängigkeit davon eine Maschine oder einen Maschinenbereich abschalten. Ein Versagen derartiger Sicherheitsschaltvorrichtungen kann für Maschinenpersonal lebensgefährliche Folgen haben, weshalb Sicherheitsschaltvorrichtungen nur verwendet werden dürfen, wenn sie durch die zuständigen Aufsichtsbehörden zugelassen sind.

Im Allgemeinen weist eine derartige Sicherheitsschaltvorrichtung einen Eingang zum Anschließen eines Meldegerätes, eine ausgangsseitige Schalteinrichtung zum sicheren Abschalten des Verbrauchers, eine Steuer/Auswerteeinheit, die in Abhängigkeit von dem Meldegerät die Schalteinrichtung ansteuert, und ein Netzteil zum Bereitstellen einer Betriebsspannung auf.

Die in Sicherheitsschaltvorrichtung verwendeten Netzteile dienen allgemein dazu, bestimmte Betriebsspannungen für die elektrischen Bauteile der Sicherheitsschaltvorrichtung bereitzustellen. In der Regel wird eine höhere Gleich- oder Wechselspannung in eine oder mehrere kleinere Betriebsspannungen umgewandelt.

Bei Sicherheitsschaltvorrichtungen wird dabei üblicherweise zum Schutz vor gefährlichen Körperströmen zunächst ein externes Netzteil verwendet, um die maximale Ausgangsspannung auch bei Bauteilfehlern auf einen für den Mensch ungefährlichen Wert zu begrenzen. Bei gängigen Sicherheitsschaltvorrichtungen liegt diese maximale Ausgangsspannung, die nicht überschritten werden darf, üblicherweise bei 65 V, wobei die Nennspannung für den Betrieb von Sicherheitsschaltvorrichtungen in der Regel 24 V beträgt.

Zur Versorgung der elektrischen Bauteile weist die Sicherheitsschaltvorrichtung ein weiteres üblicherweise in der Sicherheitsschaltvorrichtung integriertes Netzteil auf, welches die vom externen Netzteil bereitgestellte Nennspannung, beispielweise 24 V, in die benötigten kleineren Betriebsspannungen, beispielsweise 3,3 V, 5 V, 12 V oder 24 V umwandelt. Diese Netzteile müssen dazu ausgebildet sein, Überspannungen von bis zu 65 V zu beherrschen, so dass auch bei defekten Bauteilen innerhalb des Netzteiles eine Überspannung die zu versorgenden Bauteile der Sicherheitsschaltvorrichtung nicht zerstört.

Eine derartige Überspannungsschutzeinrichtung für eine Sicherheitsschaltvorrichtung ist beispielsweise aus DE 10 2008 051 514 A1 bekannt. Die beschriebene Einrichtung besteht hier aus einem Vergleichselement und einem elektrisch ansteuerbaren Stromabschaltmittel, welches bei einer Überspannung den Strompfad zum Sicherheitsmodul unterbricht. Nachteilig bei diesem Überspannungsschutz ist, dass ein defektes Bauteil in der Überspannungsschutzschaltung, insbesondere dem Stromabschaltelement, dazu führen kann, dass eine Überspannung auch bei den zu versorgenden Bauelementen anliegen kann und diese zerstört.

DE 44 36 858 C2 zeigt eine weitere Überspannungsschutzeinrichtung mit einer Vielzahl von Begrenzungsgliedern, die in Serie geschaltet sind, wobei diese Serienschaltung zwischen zwei zu begrenzenden Stromanschlüssen liegt. Die Summe der Durchlassspannungen der Begrenzungsglieder ergibt die maximal zulässige Spannung zwischen den Stromanschlüssen. Durch partielles Überbrücken der einzelnen Begrenzungsglieder und Rücklesen der Spannungsänderung an den Begrenzungsgliedern kann die Funktionsfähigkeit der Begrenzungsglieder und somit der gesamten Schutzvorrichtung überprüft werden. Nachteilig bei dieser Überspannungsschutzeinrichtung ist, dass diese Maßnahme nur gegen transiente Überspannungen wirkt. Ein konstantes Anliegen einer Überspannung kann jedoch zu einer Beschädigung der Bauteile der Überspannungsschutzeinrichtung führen und somit einen unsicheren Zustand herbeiführen.

Ganz allgemein ist eine weitere Überspannungsschutzeinrichtung für Netzteile bekannt, die als Klemmschaltung bezeichnet wird. Bei einer Klemmschaltung wird die Ausgangsspannung überwacht und im Falle einer Überspannung der Eingang mittels eines Thyristors mit der Masse kurzgeschlossen. Dies führt dazu, dass eine Sicherung, beispielsweise eine Schmelzsicherung, auslöst und die Stromzuführung permanent unterbrochen wird. Gegenüber den zuvor genannten Überspannungsschutzeinrichtungen hat die Klemmschaltung den Vorteil, dass die Stromzuführung sicher und permanent unterbrochen wird. Nachteilig an einer Klemmschaltung ist jedoch, dass sich die Funktionsweise der Schaltung nur überprüfen lässt, indem der Eingang des Netzteils tatsächlich mit der Masse kurzgeschlossen wird und die Sicherung auslöst. Eine Überprüfung im laufenden Betrieb ist somit nicht möglich.
EP 11 02 379 A1 offenbart ein Schutzsystem für einen Dreiphasenverteiltransformator, bei dem jede Phase über eine Klemmschaltung gesichert ist.

Vor diesem Hintergrund ist es somit eine Aufgabe der vorliegenden Erfindung, eine Sicherheitsschaltvorrichtung anzugeben, die wirksam vor Überspannungen geschützt ist und deren Schutzmechanismus im laufenden Betrieb überprüft werden kann.

Gemäß einem Aspekt der Erfindung wird diese Aufgabe durch eine Sicherheitsschaltvorrichtung eingangs genannter Art gelöst, wobei ein erstes und ein zweites Schaltelement in Serie geschaltet den Eingang des Netzteils mit dem Masseanschluss verbinden, und mit einem Unterbrecherelement in der Zuleitung, das auslöst, wenn das erste und das zweite Schaltelement im niederohmigen Zustand sind, wobei zwischen dem ersten und dem zweiten Schaltelement ein Referenzpunkt angeordnet ist, der einen Spannungswert aufweist, welcher bei geschlossenen niederohmigen Zustand des ersten Schaltelements und bei offenen Zustand des zweiten Schaltelements einem ersten definierten Erwartungswert und bei offenen Zustand des ersten Schaltelements und geschlossenen niederohmigen Zustand des zweiten Schaltelements einem zweiten definierten Erwartungswert entspricht, wobei die Sicherheitsschaltvorrichtung ferner eine Steuereinheit aufweist, die dazu ausgebildet ist, das erste oder das zweite Schaltelement zu betätigen und den Spannungswert am Referenzpunkt mit dem ersten und zweiten Erwartungswert zu vergleichen, um die Funktionsfähigkeit des ersten und zweiten Schaltelements zu testen.

Der Überspannungsschutzeinrichtung der neuen Sicherheitsschaltvorrichtung beruht somit auf dem grundlegenden Prinzip einer Klemmschaltung. Das erste und das zweite Schaltelement verbinden in Serie geschaltet den Eingang des Netzteils mit dem Masseanschluss. Wenn die momentane Ausgangsspannung größer ist, als die definierte Ausgangsspannung werden beide Schaltelemente geschlossen und die Zuleitung ist niederohmig mit der Masse verbunden. Der daraus resultierende hohe Strom, der von der Zuleitung durch das Unterbrecherelement beispielsweise eine Schmelzsicherung zur Masse abfließt, löst das Unterbrecherelement aus und das Netzteil wird von der Zuleitung sicher und permanent getrennt. Eine Stromzufuhr zum Netzteil ist vollständig unterbrochen.

Gegenüber einer Klemmschaltung aus dem Stand der Technik weist die Überspannungsschutzeinrichtung somit ein zusätzliches zweites Schaltelement auf, welches in Serie zum ersten Schaltelement geschaltet ist. Zum Auslösen des Unterbrecherelements müssen beide Schaltelemente betätigt werden und gleichzeitig geschlossen sein. Zwischen den Schaltelementen befindet sich ferner ein Referenzpunkt, an dem sich je nach Zustand des ersten oder des zweiten Schaltelements ein anderer, definierter Spannungspegel einstellt. Ist nur das erste Schaltelement im niederohmigen Zustand stellt sich beispielsweise eine höhere Spannungswert am Referenzpunkt ein als bei niederohmigen Zustand nur des zweiten Schaltelements. Funktionieren das erste und das zweite Schaltelemente ordnungsgemäß, können genaue Erwartungswerte für die Spannung am Referenzpunkt bestimmt werden.

Die Funktionsfähigkeit des ersten und des zweiten Schalters und damit verbunden die Funktionsfähigkeit der gesamten Klemmschaltung kann durch diese Anordnung einfach überprüft werden, indem die Schaltelemente einzeln geschlossen werden und die am Referenzpunkt anliegende Spannung mit den Erwartungswerten verglichen wird.

Besonders vorteilhaft dabei ist, dass die Überprüfung der Sicherheitsfunktion im laufenden Betrieb stattfinden kann und eine technische Anlage nicht gestoppt werden muss. Gleichzeitig bleibt die Schutzfunktion auch während der Überprüfung vollständig erhalten. Tritt eine Überspannung auf während eines der beiden Schaltelement zur Überprüfung im niederohmigen Zustand ist, kann die Sicherheitsfunktion weiterhin ausgelöst werden, indem auch das andere Schaltelement in den niederohmigen Zustand versetzt wird. Das daraufhin auslösende Unterbrecherelement führt dazu, dass die Sicherheitsschaltvorrichtung von der Stromzufuhr getrennt wird, woraufhin die technische Anlage standardmäßig in einen sicheren ungefährlichen Zustand überführt wird.

Ein weitere Vorteil der neuen Erfindung ist, dass durch die Überprüfbarkeit der Sicherheitsfunktion des Netzteils die Sicherheitsschaltvorrichtung ein PL e oder SIL 3 gemäß der eingangsgenannten einschlägigen Sicherheitsnormen EN ISO 13849-1 und EN/IEC 62061 auf sehr kostengünstige Weise erreichen kann. Zum Nachweis eines PL e / SIL 3 muss für ein Teilsystem ein Diagnosedeckungsgrad DC angegeben werden können. Ein Diagnosedeckungsgrad DC kann jedoch nur bestimmt werden, wenn die Sicherheitsfunktion des Teilsystems kontinuierlich überprüft werden kann. Da gemäß IEC 61508, eine zur EN/IEC 62061 übergeordnete Norm, die Spannungsversorgung bei der Berechnung der Sicherheitskennzahl zu berücksichtigen ist und somit als Teilsystem zu werten ist, ist es vorteilhaft, deren Sicherheitsfunktion kontinuierlich zu überprüfen. Eine derartige Überprüfung kann durch die erfindungsgemäße Vorrichtung sehr einfach erreicht werden.
Mit Hilfe der Steuereinheit kann der Testvorgang automatisiert werden. Dazu betätigt die Steuereinheit abwechselnd das erste und das zweite Schaltelement und vergleicht die sich am Referenzpunkt einstellende Spannung mit vorkonfigurierten Erwartungswerten. Die Erwartungswerte sind bevorzugt in einem Speicher abgelegt, können alternativ jedoch auch durch variable Referenzelemente beispielsweise Zenerdioden oder einstellbare Spannungsteiler bereitgestellt werden. Durch Vergleichen der gemessenen Spannung mit den Erwartungswerten kann die Funktionsfähigkeit der einzelnen Schaltelemente und somit der gesamten Schutzvorrichtung überprüft werden. Vorteilhaft bei dieser Ausgestaltung ist insbesondere, dass eine kontinuierliche Überprüfung der Schutzvorrichtung stattfinden kann.

Die oben genannte Aufgabe ist somit vollständig gelöst.

In einer weiteren Ausgestaltung stellt sich ein dritter definierte Erwartungswert am Referenzpunkt ein, wenn das erste Schaltelement und das zweite Schaltelement im geöffneten Zustand sind.

Wenn sowohl das erste als auch das zweite Schaltelement im offenen, also nicht leitenden, Zustand sind, stellt sich hier ein weiterer von dem ersten und zweiten Erwartungswerte verschiedener Spannungswert am Referenzpunkt ein. Vorzugsweise ist dieser Spannungswert ein Mittelwert des ersten und zweiten Erwartungswertes. Weiterhin hängt dieser Mittelwert besonders bevorzugt von der Eingangsspannung ab, so dass durch eine schwankende Eingangsspannung nicht irrtümlich ein fehlerhaftes Schaltelement angezeigt wird. In einem Ausführungsbeispiel wird zum einfachen und kostengünstigen Erzeugen dieses Mittelwerts ein Spannungsteiler direkt nach dem Unterbrecherelement angeordnet. Der dritte definierte Erwartungswert kann vorteilhaft für weitere Plausibilitätsprüfungen ausgewertet werden.

In einer weiteren Ausgestaltung wird das Unterbrecherelement nicht ausgelöst, wenn nur ein Schaltelement im geschlossenen niederohmigen Zustand ist.

Der Eingang des Netzteils wird hier nur kurzgeschlossen, wenn beide Schaltelemente im niederohmigen Zustand sind. Somit können die beiden Schaltelemente einzeln betätigt werden, ohne dass das Unterbrecherelement auslöst. Diese Ausgestaltung ermöglicht das unabhängige Überprüfen der Schaltelemente.

In einer weiteren Ausgestaltung weist die Sicherheitsschaltvorrichtung eine erste Überwachungseinheit und eine zweite Überwachungseinheit auf, die mit der Ausgangsspannung verbunden sind, wobei die erste Überwachungseinheit das erste Schaltelement betätigt, wenn die Ausgangspannung einen ersten definierten Spannungswert überschreitet, und die zweite Überwachungseinheit das zweite Schaltelement betätigt, wenn die Ausgangsspannung einen zweiten definierten Spannungswert überschreitet.

In dieser Ausgestaltung werden die Schaltelemente einzeln von je einer Überwachungseinheit betätigt, wobei die erste Überwachungseinheit das erste Schaltelement betätigt und die zweite Überwachungseinheit das zweite Schaltelement betätigt. Die erste und die zweite Überwachungseinheit sind mit der Ausgangsspannung des Netzteils verbunden und so ausgebildet, dass sie eine Abweichung der Ausgangsspannung von einem ersten oder zweiten definierten Spannungswert erkennen und unabhängig voneinander das erste und das zweite Schaltelement betätigen. Vorzugsweise sind der erste und der zweite definierte Spannungswert gleich. Eine erhöhte Ausgangsspannung führt somit dazu, dass beide Schaltelemente in den niederohmigen Zustand überführt werden und der Eingang des Netzteils mit Masse kurzgeschlossen wird. Die erste und die zweite Überwachungseinheit können beispielsweise durch einen Komparator, der die Ausgangsspannung mit einer definierten Referenzspannung vergleicht, realisiert werden. Alternativ kann jedoch auch eine andere Schaltung zum Detektieren einer Spannungsabweichung verwendet werden.

In einer besonders bevorzugten Ausgestaltung ist der erste und zweite definierte Spannungswert einstellbar.

Über die einstellbaren ersten und zweiten Spannungswerte kann die Spannungsdifferenz, die zum Betätigen der Schaltelemente durch die Überwachungseinrichtung führt, variiert werden. Auf diese Weise lässt sich der Toleranzbereich flexibel und einfach einstellen.

In einer weiteren Ausgestaltung weist die Sicherheitsschaltvorrichtung eine Steuereinheit auf, die die erste und/oder zweite Überwachungseinheit unabhängig von der momentanen Ausgangsspannung verstimmen kann.

Mit Hilfe der Steuereinheit kann die erste und/oder zweite Überwachungseinheit unabhängig von der momentanen Ausgangsspannung verstimmt werden, d.h. die erste und/oder zweite Überwachungseinheit erkennt eine überhöhte Spannung auch wenn diese nicht vorliegt. Dadurch kann die Funktionsfähigkeit der Überwachungseinheit und im Weiteren die Funktionsfähigkeit der Schaltelemente, die von der Überwachungseinheit gesteuert werden, sehr einfach und mit wenigen Bauelementen kostengünstig überprüft werden. Diese Ausgestaltung ist somit besonders vorteilhaft, da so die Überspannungsschutzfunktion vollständig automatisiert getestet werden kann.

In einer weiteren Ausgestaltung weist die fehlersichere Steuer/Auswerteeinheit zumindest zwei Verarbeitungseinheiten auf, die das Eingangssignal redundant zueinander verarbeiten und logische Signalverknüpfungen vornehmen, um in Abhängigkeit davon das Ausgangssignal zu erzeugen.

Die zwei redundanten Signalverarbeitungskanäle mit jeweils zumindest einer Verarbeitungseinheit tragen zur Fehlersicherheit der Sicherheitsschaltvorrichtung bei. Eine redundante Auslegung beschreibt eine Möglichkeit, wie Fehlersicherheit im Kontext der gängigen Sicherheitsnormen erreicht werden kann. Eine zwei- oder mehrkanalige Sicherheitsschaltvorrichtung ermöglicht die Zuordnung in die eines PL d oder SIL 2 der einschlägigen Sicherheitsnormen.

In einer besonders bevorzugten Ausgestaltung benötigen die beiden Verarbeitungseinheiten der Steuer/Auswerteeinheit verschiedene Betriebsspannungen, die vom Netzteil bereitgestellt werden müssen.

Die diversitäre Redundanz durch die verschiedenartige Auslegung der Betriebsspannungen für die Verarbeitungseinheiten ermöglicht eine erhöhte Fehlersicherheit. Bei Spannungseinbrüchen reagieren die Verarbeitungseinheiten vorteilhaft verschieden oder zumindest zeitlich versetzt.

In einer weiteren Ausgestaltung ist das Netzteil zum Bereitstellen mindestens einer weiteren Betriebsspannung ausgebildet, wobei eine dritte und eine vierte Überwachungseinheit mit der weiteren Betriebsspannung verbunden sind und die dritte Überwachungseinheit das erste Schaltelement betätigt, wenn die weitere Betriebsspannung einen dritten definierten Spannungswert überschreitet und die vierte Überwachungseinheit das zweite Schaltelement betätigt, wenn die weitere Betriebsspannung einen vierten definierten Spannungswert überschreitet.

In dieser Ausgestaltung stellt das Netzteil mindestens eine weitere Betriebsspannung bereit. Über die beiden zusätzlichen Überwachungseinheiten wird auch diese Betriebsspannung auf Abweichungen hin überwacht. Bei einer unerwarteten Abweichung der Betriebsspannung werden das erste und das zweite Schaltelement betätigt und so die Stromzufuhr zum Netzteil unterbrochen. Auf diese Weise können somit mehrere verschiedene Betriebsspannungen vom Netzteil generiert werden, die auf denselben Überspannungsschutzmechanismus zurückgreifen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Ausführungsbeispiels der Sicherheitsschaltvorrichtung,
- Fig. 2: eine schematische Darstellung eines Ausführungsbeispiel eines Netzteils der Sicherheitsschaltvorrichtung,
- Fig. 2a: ein Zustandsdiagramm für das Ausführungsbeispiel aus Fig. 2, und
- Fig. 3: ein Implementierungsbeispiel des Ausführungsbeispiels aus Fig. 2.

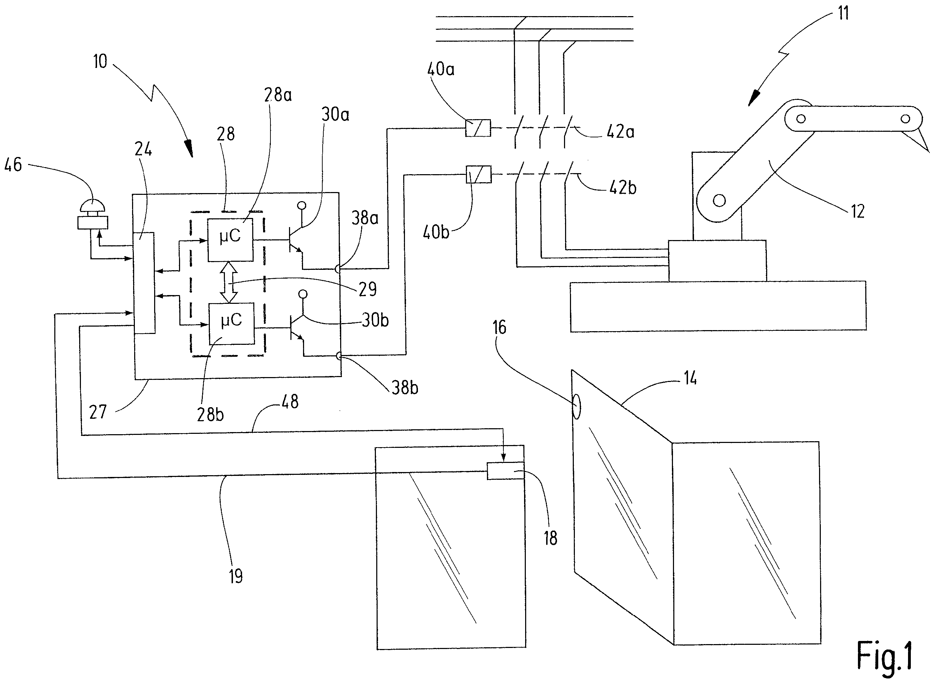

Fig. 1 zeigt eine vereinfachte Darstellung eines Ausführungsbeispiels der Sicherheitsschaltvorrichtung 10 zum fehlersicheren Ein- oder Ausschalten einer gefährlichen Anlage 11. In anderen Worten wird die Sicherheitsschaltvorrichtung 10 für Sicherheitsaufgaben verwendet. Die Anlage 11 beinhaltet hier beispielhaft einen Roboter 12, von dessen Bewegungen im Arbeitsbetrieb eine Gefahr für Personen ausgeht, die sich im Arbeitsbereich des Roboters 12 aufhalten. Aus diesem Grund ist der Arbeitsbereich des Roboters 12 mit einem Schutzzaun mit einer Schutztür 14 abgesichert. Die Schutztür 14 ermöglicht den Zugang in den Arbeitsbereich des Roboters 12, beispielsweise für Wartungsarbeiten oder für Einrichtarbeiten. Im normalen Arbeitsbetrieb darf der Roboter 12 jedoch nur arbeiten, wenn die Schutztür 14 geschlossen ist. Sobald die Schutztür 14 geöffnet wird, muss der Roboter 12 abgeschaltet werden oder auf andere Weise in einen sicheren Zustand gebracht werden.

Um den geschlossenen Zustand der Schutztür 14 zu detektieren, ist an der Schutztür 14 ein Schutztürschalter mit einem Türteil 16 und einem Rahmenteil 18 angebracht. Das Rahmenteil 18 erzeugt auf einer Leitung 19 ein Schutztürsignal, das über die Leitung 19 der neuen Sicherheitsschaltvorrichtung 10 zugeführt ist.

Die Sicherheitsschaltvorrichtung 10 weist mindestens einen Eingang zum Aufnehmen eines Eingangssignals auf, beispielsweise zumindest einen ersten Eingang zum Aufnehmen des über die Leitung 19 übertragenden Schutztürsignals. In diesem Ausführungsbeispiel besitzt die Sicherheitsschaltvorrichtung 10 einen E/A-Teil 24 mit einer Vielzahl von Eingängen und Ausgängen. Die Eingänge und Ausgänge sind in der Form von Anschlüssen (bzw. externen oder Geräteanschlüssen) ausgebildet. In einigen Ausführungsbeispielen sind die Anschlüsse Anschlussklemmen oder Feldklemmen, die an einer Gehäuseseite des Gehäuses 27 der Sicherheitsschaltvorrichtung 10 angeordnet sind. Beispielsweise kann es sich um Federzugklemmen oder um Schraubklemmen handeln. In anderen Ausführungsbeispielen können die Anschlüsse Stecker oder Buchsen sein, die mehrere Kontaktelemente (Pins) beinhalten, wobei jeweils ein Pin einen Anschluss bildet. Häufig werden M8-Buchsen mit fünf Kontaktpins für den Anschluss von Meldegeräten oder anderen Sensoren auf Feldebene verwendet. Dementsprechend können Ausführungsbeispiele der neuen Sicherheitsschaltvorrichtung 10 Feldgeräte sein oder umfassen, die außerhalb eines Schaltschranks in räumlicher Nähe zu dem Roboter 12 angeordnet sind.

Die Sicherheitsschaltvorrichtung 10 weist weiterhin eine fehlersicherere Steuer/Auswerteeinheit 28 auf. Die Steuer/Auswerteeinheit 28 verarbeitet das Eingangssignal, beispielsweise das über die Leitung 19 übertragenden Schutztürsignal, um in Abhängigkeit davon ein Ausgangssignal zum Ein- oder Ausschalten der gefährlichen Anlage 11 zu erzeugen. In diesem Ausführungsbeispiel besitzt die fehlersicherere Steuer/Auswerteeinheit 28 zwei Verarbeitungseinheiten 28a, 28b. Die Verarbeitungseinheiten 28a, 28b sind hier jeweils mit dem E/A-Teil 24 verbunden. Die Verarbeitungseinheiten 28a, 28b verarbeiten das Eingangssignal redundant zueinander und nehmen logische Signalverknüpfungen vor (z.B. durch Vergleichen der Signale, was in Fig. 1 mit einem Pfeil 29 dargestellt ist), um in Abhängigkeit davon das Ausgangssignal zu erzeugen. Die Sicherheitsschaltvorrichtung 10 besitzt daher in diesem Ausführungsbeispiel zwei redundante Signalverarbeitungskanäle. Die Verarbeitungseinheiten können beispielsweise in Form von Mikrokontrollern bereitgestellt werden. Anstelle von zwei Mikrokontrollern können Mikroprozessoren, ASICs, FPGAs und/oder andere Signalverarbeitungsschaltkreise verwendet sein, die Logikverknüpfungen ausführen. Das Ausgangssignal wird verwendet, um ein Schaltelement zum Abschalten des Roboters 12 anzusteuern. Eine solche Sicherheitsschaltvorrichtung 10 kann daher zum fehlersicheren (FS) Abschalten der Anlage 11, hier des Roboters 12, verwendet werden.

In dem hier dargestellten Fall besitzt die Sicherheitsschaltvorrichtung 10 zwei redundante Schaltelemente 30a, 30b. Jedes dieser beiden Schaltelemente ist in der Lage, ein hohes Spannungspotential zu einem Ausgang oder Geräteanschluss 38a, 38b der Sicherheitsschaltvorrichtung 10 durchzuschalten, um einen Stromfluss zu einem Schütz 40a, 40b zu ermöglichen, oder diesen Stromfluss zu unterbrechen. Damit kann jedes der Schaltelemente 30 einen Aktor, wie einen Schütz oder ein Magnetventil, abschalten.

Die Schütze 40a, 40b besitzen jeweils Arbeitskontakte 42a, 42b. Die Arbeitskontakte 42a, 42b sind hier in Reihe zueinander in einen Stromversorgungspfad von einer Stromversorgung 44 zu dem Roboter 12 angeordnet. Sobald die Sicherheitsschaltvorrichtung 10 die Schütze 40a, 40b abschaltet, fallen die Kontakte 42 ab und die Stromversorgung für den Roboter 12 wird abgeschaltet. Den einschlägigen Fachleuten ist klar, dass eine solche "radikale" Abschaltung hier beispielhaft beschrieben ist. Abweichend hiervon können bei einer Sicherheitsanforderung lediglich Teile des Roboters 12 abgeschaltet werden, wie etwa die gefährlichen Antriebe, während andere Teile des Roboters 12 funktionsbereit bleiben. Auch ein verzögertes Abschalten ist denkbar, damit der Roboter 12 ggf. vor dem Abschalten der Antriebe kontrolliert abgebremst werden kann.

Die Sicherheitsschaltvorrichtung 10 steuert die Schaltelemente 30a, 30b in diesem Ausführungsbeispiel in Abhängigkeit von dem Signal des Schutztürschalters auf der Leitung 19 und in Abhängigkeit von einem weiteren Eingangssignal von einem Not-Aus-Taster 46 an. Auch der Not-Aus-Taster 46 ist über Leitungen mit Geräteanschlüssen der Sicherheitsschaltvorrichtung 10 verbunden. Insbesondere weist die Sicherheitsschaltvorrichtung 10 einen zweiten Eingang zum Aufnehmen des Eingangssignals von dem Not-Aus-Taster 46 auf. Bevorzugt kann jedes der Eingangssignale redundant anliegen bzw. es können jeweils zwei Eingangs- und Ausgangsleitungen oder Anschlüsse vorgesehen sein (in Fig. 1 nicht dargestellt). In dem in Fig. 1 gezeigten Beispiel können also für den Not-Aus-Taster 46 zwei Eingangsleitungen oder Eingänge vorgesehen sein, die jeweils ein Eingangssignal von dem Not-Aus- Taster 46 liefern. Ähnliches gilt für das Signal des Schutztürschalters.

In einigen Ausführungsbeispielen erzeugt die Sicherheitsschaltvorrichtung 10 Ausgangssignale, die den einzelnen Meldegeräten zugeführt sind. Beispielhaft ist ein solches Ausgangssignal über eine Leitung 48 zu dem Rahmenteil 18 des Schutztürschalters geführt. Das Rahmenteil 18 schleift das Ausgangssignal des Sicherheitsschaltgerätes 10 von der Leitung 48 auf die Leitung 19, wenn sich das Türteil 16 in der Nähe des Rahmenteils 18 befindet, das heißt wenn die Schutztür 14 geschlossen ist. Daher kann die Sicherheitsschaltvorrichtung 10 den Schutztürschalter mit Hilfe des Ausgangssignals auf der Leitung 48 und mit Hilfe des Eingangssignals auf der Leitung 19 überwachen. In vergleichbarer Weise überwacht die Sicherheitsschaltvorrichtung 10 hier den Not-Aus-Taster 46.

Abweichend von der Darstellung in Fig. 1 werden in der Praxis häufig zwei redundante Ausgangssignale der Sicherheitsschaltvorrichtung 10 verwendet, die jeweils über eine separate Signalleitung zu einem Meldegerät geführt sind und über dieses Meldegerät zurück zur Sicherheitsschaltvorrichtung 10 geschleift sind. Beispielhaft für eine solche Realisierung sei auf DE 10 2004 020 995 A1 verwiesen, die hinsichtlich der Details einer solchen redundanten Überwachung eines Meldegerätes durch Bezugnahme aufgenommen ist. Auch der Not-Aus-Taster 46 wird in der Praxis häufig mit redundanten Eingangs- und Ausgangsleitungen überwacht, wie oben erwähnt.

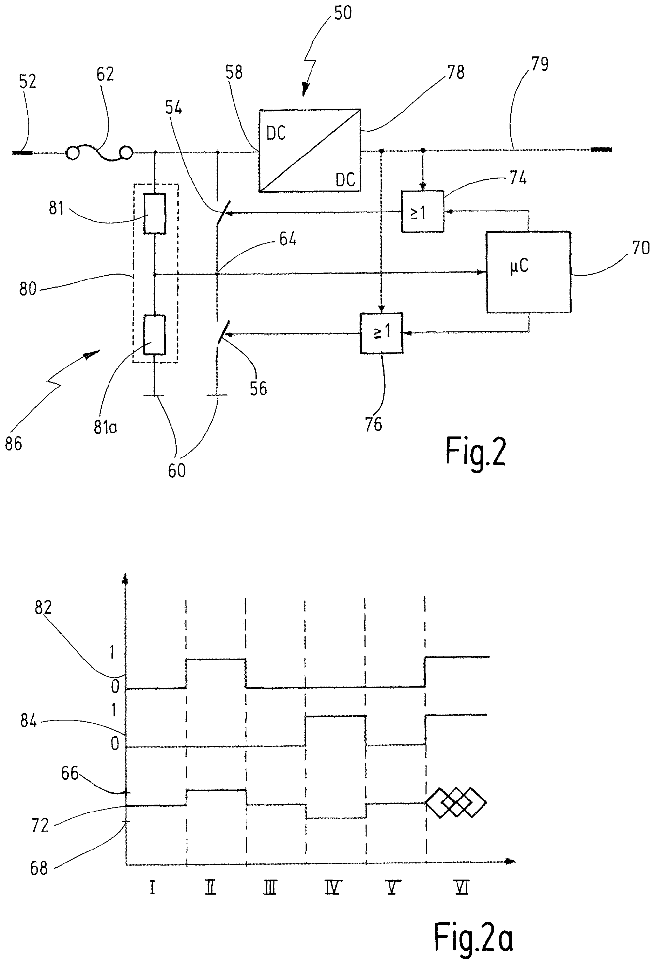

Fig. 2 zeigt eine vereinfachte schematische Darstellung eines Ausführungsbeispiels des Netzteils 50 der neuen Sicherheitsschaltvorrichtung 10. Im Wesentlichen umfasst das Netzteil 50 eine Zuleitung 52 mit einem Unterbrecherelement 62, einen Spannungswandler 78 und eine Überspannungsschutzeinrichtung 86.

Über die Zuleitung 52 wird dem Spannungswandler 78 eine Eingangsspannung zugeführt, die bei Sicherheitsschaltgeräten üblicherweise von einem externen Netzteil bereitgestellt wird und eine Gleichspannung ist. Bei dem Spannungswandler 78 handelt es sich hier folglich um einen Gleichspannungswandler (DC-DC-Wandler). Alternativ kann jedoch auch eine andere beliebige Gleich- oder Wechselspannung am Eingang anliegen und ein entsprechender Spannungswandler zum Einsatz kommen. Ausgangsseitig liefert der Spannungswandler 78 die für den Betrieb der Sicherheitsschaltvorrichtung relevanten Betriebsspannungen von beispielsweise 3,3V oder 5V.

Das Unterbrecherelement 62 in der Zuleitung ist stromabhängig und löst aus, wenn der Stromfluss durch das Unterbrecherelement einen definierten Wert überschreitet. Das Unterbrecherelement 62 kann beispielsweise als einfache Schmelzsicherung ausgelegt sein, bei der das Überschreiten einer definierten Stromstärke zum Abschmelzen eines Schmelzleiters führt. Alternativ kann auch eine komplexe Überstromschutzeinrichtung, wie beispielsweise ein Leitungsschutzschalter, verwendet werden, der einen elektrischen Stromkreis unterbricht, wenn der elektrische Strom eine festgelegte Stromstärke über eine vorgegebene Zeit hinaus überschreitet.

Die Überspannungsschutzeinrichtung 86 weist in dem Ausführungsbeispiel nach Fig. 2 zwei in Serie geschaltete Schaltelemente 54, 56, zwei Überwachungseinrichtungen 74, 76, eine Steuereinheit 70 und einen Spannungsteiler 80 auf. Die in Serie geschalteten Schaltelemente 54, 56 verbinden die Zuleitung 52 nach dem Unterbrecherelement 62 und vor dem Eingang 58 mit einem Masseanschluss 60. Im ordnungsgemäßen Betrieb sind beide Schaltelemente 54, 56 geöffnet, d.h. ein Stromabfluss zur Masse 60 ist unterbrochen. Tritt ein unerwarteter für die Bauteile des Netzteils gefährlicher Zustand ein, werden beide Schaltelemente 54, 56 geschlossen, d.h. in einen niederohmigen Zustand versetzt und die Zuleitung 52 mit der Masse 60 kurzgeschlossen. Hierdurch kommt es zu einem Anstieg der Stromstärke in der Zuleitung 52 bis zu dem Punkt, an dem die für das Unterbrecherelement 62 maßgebliche Stromstärke überschritten ist und dieses auslöst. Nach Auslösen des Unterbrecherelements 62 ist der Eingang 58 des Spannungswandlers 78 vollständig von der Zuleitung 52 getrennt.

Für das Betätigen der Schaltelemente 54, 56 sind in diesem Ausführungsbeispiel zwei Überwachungseinheiten 74, 76 zuständig. Die Überwachungseinheiten sind beide mit dem Ausgang des Spannungswandlers 78 verbunden und werten die von diesem erzeugte Spannung aus. Vorzugsweise handelt es sich bei den Überwachungseinheiten um Komparatoren, die die Ausgangspannung 79 mit einer definierten Referenzspannung vergleichen. Weicht die Ausgangsspannung 79 untypisch von einer vordefinierten Sollspannung ab, betätigt die erste Überwachungseinheit 74 das erste Schaltelement 54 und die zweite Überwachungseinheit 76 das zweite Schaltelement 56. Sind beide Schaltelemente 54, 56 geschlossen löst, wie oben beschrieben, das Unterbrecherelement 62 aus und die Stromzufuhr wird unterbrochen.

Zwischen dem ersten und dem zweiten Schaltelement 54, 56 ist ein Referenzpunkt 64 angeordnet, an dem ein Spannungswert abgegriffen werden kann. Der Spannungswerte liegt abhängig von Schaltzustand des ersten und zweiten Schaltelements 54, 56 im Bereich eines ersten, zweiten oder dritten Erwartungswertes 66, 68, 72. Der erste Erwartungswerts 66 stellt sich ein, wenn das erste Schaltelement 54 geschlossen und das zweite Schaltelement 56 geöffnet ist. Der zweite Erwartungswerte 68 stellt sich bei umgekehrter Stellung der Schaltelemente ein, d.h. wenn das zweite Schaltelement 56 geschlossen und das erste geöffnet ist. Der dritte Erwartungswert stellt sich ein, wenn beide Schaltelemente 54, 56 geöffnet sind und die Vorrichtung sich im ordnungsgemäßen Betrieb befindet. Vorzugsweise ist der dritte Erwartungswert 72 der Mittelwert aus dem ersten und zweiten Erwartungswert 66, 68, d.h. der erste Erwartungswert 66 stellt eine Abweichung zu einer höheren Spannung und der zweite Erwartungswert 68 eine Abweichung zu einer niedrigeren Spannung bezogen auf den dritten Erwartungswert 72 dar.

Der Referenzpunkt ist weiterhin mit dem Mittelkontakt eines Spannungsteilers 80 verbunden, wobei der Spannungsteiler wiederum eingangsseitig über das Unterbrecherelement 62 mit der Zuleitung 52 verbunden ist. Der Spannungsteiler 80 hebt die Spannung am Referenzpunkt um eine definierte und von der Eingangsspannung an der Zuleitung abhängige Offsetspannung an, so dass auch die Erwartungswerte 66, 68, 72 angehoben werden. Die Spannungsdifferenzen zwischen den ersten, zweiten und dritten Erwartungswerten 66, 68, 72 bleiben unverändert. Vorzugsweise ist der Spannungsteiler 80 symmetrisch mit zwei gleichen Widerständen 81, 81a aufgebaut.

Ferner ist in diesem Ausführungsbeispiel der Referenzpunkt 64 mit einer Steuereinheit 70 verbunden, die die Spannung am Referenzpunkt 64 auswerten kann und Abweichungen vom ersten, zweiten oder dritten Erwartungswert 66, 68, 72 detektiert. Die Steuereinheit 70 ist weiterhin mit der ersten und zweiten Überwachungseinheit 74, 76 verbunden und dazu ausgebildete diese zu verstimmen. Unter einer Verstimmung ist in diesem Zusammenhang zu verstehen, dass eine Überwachungseinheit auch bei anliegen der definierten Spannung am Ausgang des Spannungswandlers 78 das zugehörige Schaltelement betätigt. Eine Verstimmung kann beispielsweise bei Überwachungseinheiten, die als Komparator ausgebildet sind, durch eine Änderung der Referenzspannung hervorgerufen werden.

Abweichungen von den Erwartungswerten zeigen Fehler in den Schaltelementen 54, 56 der Überspannungsschutzeinrichtung 86 an. Eine Abweichung des ersten Erwartungswertes 66 zeigt ein defektes erstes Schaltelement 54 an und eine Abweichung des zweiten Erwartungswertes 68 zeigt ein defektes zweites Schaltelement 56 an. Vorzugsweise wird eine Abweichung des ersten und zweiten Erwartungswertes im Verhältnis zum dritten Erwartungswert gemessen.

Zum automatisierten Testen der Schaltelemente und der ordnungsmäßigen Funktion der Überspannungsschutzeinrichtung 86 verstimmt die Steuereinheit 70 abwechselnd die erste und zweite Überwachungseinheit 74, 76, wodurch abwechselnd das erste und das zweite Schaltelement 54, 56 betätigt werden. Durch Rücklesen des Spannungswertes am Referenzpunkt 64 und anschließenden Vergleich mit den Erwartungswerten 66, 68, 72 wird die ordnungsmäßige Funktion der Schaltelemente 54, 56 überprüft. Die Überprüfung kann kontinuierlich bei laufendem Betrieb der zu überwachenden technischen Anlage 11 erfolgen, ohne dass die Schutzfunktion während der Überprüfung eingeschränkt wird.

Das Diagramm aus Fig. 2a verdeutlich die einzelnen Zustände die das Ausführungsbeispiel aus Fig. 2 annehmen kann. Das Diagramm ist hierzu in 6 Abschnitte (I bis VI) eingeteilt, die je einen Zustand der Überspannungsschutzeinrichtung 86 darstellen. Die Graphen mit den Bezugsziffern 82 und 84 veranschaulichen die Schaltzustände der Schaltelemente 54, 56. Das erste Schaltelement 54, dessen Zustand durch den Graph 82 gezeigt ist, ist entweder im offenen, nichtleitenden Zustand (dargestellt durch eine 0), oder im geschlossenen, leitenden Zustand (dargestellte durch ein 1). Der Zustand des zweiten Schaltelementes 56 ist analog durch den Graphen 84 ersichtlich.

In den Abschnitten I, III und V ist die Überspannungsschutzeinrichtung 86 im Normalbetrieb. Normalbetrieb bedeutet in diesem Zusammenhang, dass die Überwachung der Ausgangsspannung aktiv ist und gegenwärtig kein Überprüfen der Schaltelemente stattfindet. Die Schaltelemente 54, 56 sind geöffnet und der Spannungswert am Referenzpunkt 64 ist im Bereich des dritten Erwartungswerts 72.

Abschnitt II zeigt die Überprüfung des ersten Schaltelements. Das erste Schaltelement 54 ist geschlossen und bei ordnungsmäßiger Funktion des Schaltelements 54 stellt sich am Referenzpunkt 64 ein Spannungswert in Bereich des ersten Erwartungswertes 66 ein, der in diesem Beispiel höher ist als der dritte Erwartungswert 72. Abschnitt IV zeigt analog die Überprüfung des zweiten Schaltelements 56. Hierbei sinkt die Spannung am Referenzpunkt 64 bei ordnungsmäßiger Funktion des Schaltelements 56 auf einen Wert im Bereich des zweiten Erwartungswertes 68 ab. Bei dem hier gezeigten Ausführungsbeispiel ist der dritte Erwartungswert 72 der Mittelwert des ersten und zweiten Erwartungswertes 66, 68.

Im letzten Abschnitt VI wird der Zustand der Schaltelemente 54, 56 bei Auftreten einer Überspannung dargestellt. Das erste und zweite Schaltelement 54, 56 sind geschlossen, wodurch die Zuleitung 52 mit der Masse 60 kurzgeschlossen wird. Am Referenzpunkt 64 stellt sich ein undefinierter Wert eine bis zu dem Zeitpunkt, an dem das Unterbrecherelement 62 auslöst und die gesamte Einrichtung von der Zuleitung 52 getrennt wird.

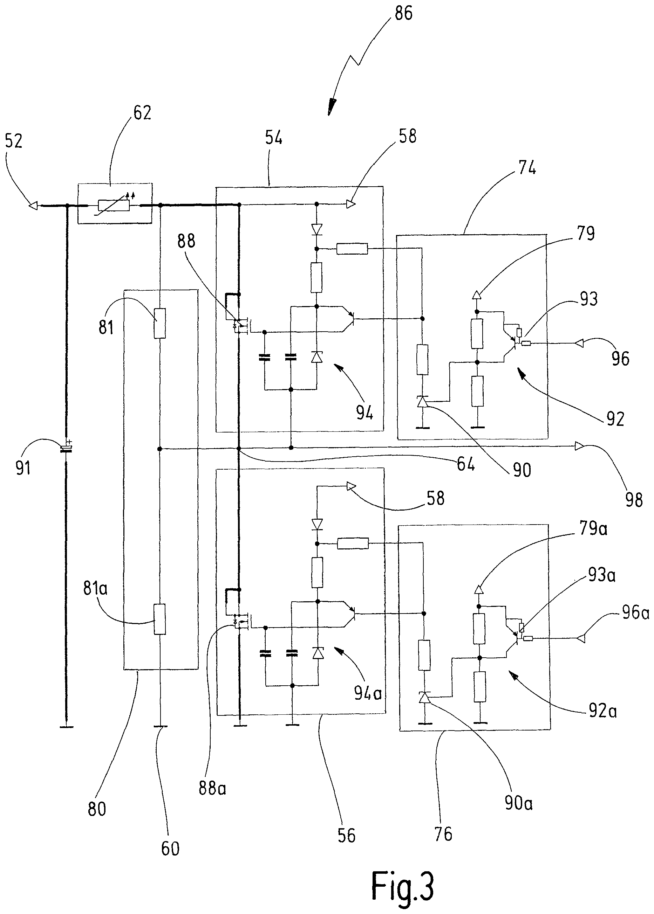

Fig. 3 zeigt eine vorteilhafte schaltungstechnische Implementierung des Ausführungsbeispiels aus Fig. 2, insbesondere der Überspannungsschutzeinrichtung 86. Gleiche Bezugsziffern bezeichnen gleiche Teile wie in Fig. 2. Parallel zur Zuleitung 52 ist zunächst ein Glättungskondensator 91 parallel geschaltet, gefolgt von dem Unterbrecherelement 62, das in diesem Ausführungsbeispiel eine rückstellbare PTC Sicherung ist. Nach dem Unterbrecherelement 62 folgt der parallel geschaltete Spannungsteiler 80, der hier aus zwei symmetrischen Widerständen 81, 81a gebildet ist und ausgangseitig am Referenzpunkt 64 eine von Zuleitung 52 betragsmäßig halbierte Offsetspannung bereitstellt.

In dem in Fig. 3 gezeigten Ausführungsbeispiel wird die an der Zuleitung 52 anliegende Spannung, beispielsweise 24V, von einem externen Netzteil bereitgestellt. Die Zuleitung 52 ist über das Unterbrecherelement 62 mit dem Eingang 58 des Netzteils (hier nicht dargestellt) verbunden. Bei dem nicht dargestellten Netzteil handelte es sich hier um einen DC-DC-Wandler, welcher die Eingangsspannung von hier 24V in eine Ausgangsspannung 79, 79a von hier 3,3V wandelt. Die Ausgangspannung 79, 79a des Netzteils ist mit der ersten und zweiten Überwachungseinheit 74, 76 der Überspannungsschutzeinrichtung 86 verbunden.

Die erste und zweite Überwachsungseinheit 74, 76 koppeln je die Ausgangsspannung 79,79a über einen Spannungsteiler 92, 92a mit einem Referenzelement 90, 90a. Bei den Referenzelementen 90, 90a handelt es sich hier um variable Zener-Shunt-Regler. Ist die bereitzustellende Ausgangsspannung 79, 79a höher als die von dem Spannungsteiler 92, 92a und dem Referenzelement 90, 90a definierte höchste Ausgangsspannung , werden das erste und das zweite Schaltelement 54, 56 betätigt. Das erste und das zweite Schaltelement 54, 56 sind in Serie geschaltet und verbinden die Zuleitung nach dem Unterbrecherelement 62 mit dem Masseanschluss 64. Vorzugsweise sind die Schaltelemente selbstsperrende n-Kanal-MOSFETs 88, 88a, die je über eine Ansteuerschaltung 94, 94a mit dem Referenzelement 90, 90a gekoppelt sind. Sind beide Schaltelemente aufgrund einer abweichenden Ausgangsspannung 79, 79a geschlossen wird die Zuleitung 52 kurzgeschlossen und das Unterbrecherelement 62 ausgelöst.

Die Schaltung sieht weiterhin vor, dass jede Überwachungseinheit 74, 76 separat verstimmt werden kann. Hierzu wird die regulierbare Referenzspannung des Referenzelements 90, 90a verändert. Die Referenzspannung wird über einen Spannungsteiler 92, 92a eingestellt, wobei sich der erste Widerstand des Spannungsteilers 92, 92a durch ein zusätzliches Schaltelement 93, 93a überbrücken lässt. Durch die Überbrückung ändert sich die ausgangseitige Spannung des Spannungsteilers 92, 92a und somit die Referenzspannung des Referenzelements 90, 90a. Das Verstimmen der Referenzspannung führt anschließend zum Betätigen des zugehörigen Schaltelements 54, 56. Die Verstimmung der ersten Überwachungseinheit 74 erfolgt über ein an dem Anschluss 96 anliegendes Signal, welches das Schaltelement 93 betätigt. Das Verstimmen der zweiten Überwachungseinheit 76 erfolgt analog über den Anschluss 96a und das Schaltelement 93a. Die Schaltelemente 54, 56 können so automatisch durch ein logisches Signal einzeln betätigt werden beispielsweise durch eine hier nicht näher dargestellten Steuereinheit.

Ferner kann über den Anschluss 98 die Spannung am Referenzpunkt 64 gemessen werden und so in der zuvor beschriebenen Weise die Funktionsfähigkeit der Schaltelemente 54, 56 und damit verbunden die Funktionsfähigkeit der gesamten Überspannungsschutzeinrichtung 86 überprüft werden.

## Patentansprüche

1. Sicherheitsschaltvorrichtung (10) zum fehlersicheren Ein- oder Ausschalten einer technischen Anlage (11), mit einem Eingang (24) zum Aufnehmen eines Eingangssignals, mit einer fehlersicheren Steuer/Auswerteeinheit (28), die das Eingangssignal verarbeitet, um in Abhängigkeit davon ein Ausgangssignal zum Ein- und Ausschalten der technischen Anlage (11) zu erzeugen, mit einem Netzteil (50) mit einem Masseanschluss (60) zum Bereitstellen zumindest einer Betriebsspannung für die Steuer/Auswerteeinheit (28), wobei das Netzteil (50) über eine Zuleitung (52) eine Eingangsspannung aufnimmt und ausgangsseitig eine definierte Ausgangsspannung bereitstellt, **dadurch gekennzeichnet, dass** ein erstes und ein zweites Schaltelement (54, 56) in Serie geschaltet den Eingang (58) des Netzteils mit dem Masseanschluss (60) verbinden, und mit einem Unterbrecherelement (62) in der Zuleitung (52), das auslöst, wenn das erste und das zweite Schaltelement (54, 56) im geschlossenen niederohmigen Zustand sind, wobei zwischen dem ersten und dem zweiten Schaltelement (54, 56) ein Referenzpunkt (64) angeordnet ist, der einen Spannungswert aufweist, welcher bei geschlossenen niederohmigen Zustand des ersten Schaltelements (54) und bei offenen Zustand des zweiten Schaltelements (56) einem ersten definierten Erwartungswert (66) und bei offenen Zustand des ersten Schaltelements (54) und geschlossenen niederohmigen Zustand des zweiten Schaltelements (56) einem zweiten definierten Erwartungswert (68) entspricht, wobei die Sicherheitsschaltvorrichtung ferner eine Steuereinheit (70) aufweist, die dazu ausgebildert ist, das erste oder das zweite Schaltelement (54, 56) wahlweise zu betätigen und den Spannungswert am Referenzpunkt (64) mit dem ersten und zweiten Erwartungswert (66, 68) zu vergleichen, um die Funktionsfähigkeit des ersten und zweiten Schaltelements zu testen.

2. Sicherheitsschaltvorrichtung nach Anspruch 1, **gekennzeichnet, durch** einen dritten Erwartungswert (72), der sich am Referenzpunkt (64) einstellt, wenn das erste Schaltelement (54) und das zweite Schaltelement (56) im geöffneten Zustand sind.

3. Sicherheitsschaltvorrichtung nach einem der Ansprüche 1 oder 2, **dadurch gekennzeichnet, dass** das Unterbrecherelement (62) nicht auslöst, wenn nur das erste oder das zweite Schaltelement (54, 56) im geschlossenen niederohmigen Zustand ist.

4. Sicherheitsschaltvorrichtung nach einem der Ansprüche 1 bis 3, **gekennzeichnet durch** eine erste Überwachungseinheit (74) und eine zweite Überwachungseinheit (76), die mit der Ausgangsspannung verbunden sind, wobei die erste Überwachungseinheit (74) das erste Schaltelement (54) betätigt, wenn die Ausgangspannung einen ersten definierten Spannungswert überschreitet, und die zweite Überwachungseinheit (76) das zweite Schaltelement (56) betätigt, wenn die Ausgangsspannung einen zweiten definierten Spannungswert überschreitet.

5. Sicherheitsschaltvorrichtung nach Anspruch 4, **dadurch gekennzeichnet, dass** der erste und zweite definierte Spannungswert einstellbar sind.

6. Sicherheitsschaltvorrichtung nach einem der Ansprüche 4 oder 5, **gekennzeichnet durch** eine Steuereinheit (70), die die erste und/oder zweite Überwachungseinheit (74, 76) unabhängig von der momentanen Ausgangsspannung verstimmen kann.

7. Sicherheitsschaltvorrichtung nach einem der Ansprüche 1 bis 6, **dadurch gekennzeichnet, dass** die fehlersichere Steuer/Auswerteeinheit (28) zumindest zwei Verarbeitungseinheiten (28a, 28b) aufweist, die das Eingangssignal redundant zueinander verarbeiten und logische Signalverknüpfungen vornehmen, um in Abhängigkeit davon das Ausgangssignal zu erzeugen.

8. Sicherheitsschaltvorrichtung nach Anspruch 7, **dadurch gekennzeichnet, dass** die zumindest zwei Verarbeitungseinheiten (28a, 28b) unterschiedliche Betriebsspannungen benötigen.

9. Sicherheitsschaltvorrichtung nach einem der Ansprüche 1 bis 8, **dadurch gekennzeichnet, dass** das Netzteil (50) zum Erzeugen mindestens einer weiteren Betriebsspannung ausgebildet ist, wobei eine dritte und eine vierte Überwachungseinheit mit der weiteren Betriebsspannung verbunden sind und die dritte Überwachungseinheit das erste Schaltelement (54) betätigt, wenn die weitere Betriebsspannung einen dritten definierten Spannungswert überschreitet und die vierte Überwachungseinheit das zweite Schaltelement (56) betätigt, wenn die weitere Betriebsspannung einen vierten definierten Spannungswert überschreitet.

10. Verfahren zum Überwachen eines Netzteils (50) einer Sicherheitsschaltvorrichtung (10) zum fehlersicheren Ein- oder Ausschalten einer technischen Anlage (11), mit einem Eingang (24) zum Aufnehmen eines Eingangssignals, mit einer fehlersicheren Steuer/Auswerteeinheit (28), die das Eingangssignal verarbeitet, um in Abhängigkeit davon ein Ausgangssignal zum Ein- und Ausschalten der technischen Anlage (11) zu erzeugen, wobei das Netzteil (50) einen Masseanschluss (60) aufweist und über eine Zuleitung (52) eine Eingangsspannung aufnimmt und ausgangsseitig eine definierte Ausgangsspannung bereitstellt, **dadurch gekennzeichnet, dass** ein erstes und ein zweites Schaltelement (54, 56) in Serie geschaltet den Eingang (58) des Netzteils mit dem Masseanschluss (60) verbinden, und mit einem Unterbrecherelement (62) in der Zuleitung (52), das auslöst, wenn das erste und das zweite Schaltelement (54, 56) gleichzeitig betätigt werden, wobei zwischen dem ersten und dem zweiten Schaltelement (54, 56) ein Referenzpunkt (64) angeordnet ist, an dem ein Spannungswert ausgelesen wird, wobei der Spannungswert bei geschlossenen niederohmigen Zustand des ersten Schaltelements (54) und bei offenen Zustand des zweiten Schaltelements (56) im Bereich eines ersten Erwartungswertes (66) liegt und bei offenen Zustand des ersten Schaltelements (54) und geschlossenen niederohmigen Zustand des zweiten Schaltelements (56) der Spannungswert in Bereich eines zweiten Erwartungswertes (68) liegt, wobei die Sicherheitsschaltvorrichtung ferner eine Steuereinheit (70) aufweist, die wahlweise das erste oder das zweite Schaltelement (54, 56) betätigt und den Spannungswert am Referenzpunkt (64) mit dem ersten und dem zweiten Erwartungswert (66, 68) vergleicht, um die Funktionsfähigkeit des ersten und des zweiten Schaltelements zu testen.

## Claims

1. A safety switching device (10) for switching on or switching off a technical installation (11) in a failsafe manner, comprising an input (24) for receiving an input signal, comprising a failsafe control/evaluation unit (28) that processes the input signal in order to generate an output signal for switching on or switching off the technical installation (11) in response thereto, and comprising a power supply unit (50) for providing at least one operating voltage for the control/evaluation unit (60), the power supply unit (50) having a ground connection (60), wherein the power supply unit (50) receives an input voltage via a feed line (52) and provides a defined output voltage on an output side, **characterized by** a first and a second switching element (54, 56) being arranged in series and connecting the input (58) of the power supply unit to the ground connection (60), and by an interrupter element (62) in the feed line (52), which interrupter element (62) triggers when the first and the second switching elements (54, 56) are in a closed, low-impedance state, wherein a reference point (64) is arranged between the first and the second switching elements (54, 56), which reference point has a voltage value that corresponds to a first expectation value (66) when the first switching element (54) is in a closed, low-impedance state and the second switching element (56) is in an open state, and said voltage value corresponds to a second expectation value (68) when the first switching element (54) is in the open state and the second switching element (56) is in the closed, low-impedance state, with the safety switching device further comprising a control element (70) configured to selectively actuate the first or the second switching element (54, 56) and to compare the voltage value at the reference point (64) with the first and second expectation value (66, 68) in order to test the operativeness of the first and second switching element.

2. The safety switching device of claim 1, **characterized by** a third expectation value (72) that occurs at the reference point (64) if the first switching element (54) and the second switching element (56) are in the open state.

3. The safety switching device of any of claims 1 or 2, **characterized in that** the interrupter element (62) does not trigger if only the first or the second switching element (54, 56) is in the closed, low-impedance state.

4. The safety switching device of any of claims 1 to 3, **characterized by** a first monitoring unit (74) and a second monitoring unit (76) that are connected to the output voltage, wherein the first monitoring unit (74) actuates the first switching element (54) if the output voltage exceeds a first defined voltage value, and the second monitoring unit (76) actuates the second switching element (56) if the output voltage exceeds a second defined voltage value.

5. The safety switching device of claim 4, **characterized in that** the first and second defined voltage values are adjustable.

6. The safety switching device of any of claims 4 or 5 **characterized by** a control element (70) that can adjust the first and/or second monitoring unit (74, 76) independently of the instantaneous output voltage.

7. The safety switching device of any of claims 1 to 6, **characterized in that** the failsafe control/evaluation unit (28) comprises at least two processing units (28a, 28b) that process the input signal in a redundant manner with respect to one another and perform logic signal operations in order to generate the output signal in response thereto.

8. The safety switching device of claim 7, **characterized in that** the at least two processing units (28a, 28b) require different operating voltages.

9. The safety switching device of any one of claims 1 to 8, **characterized in that** the power supply unit (50) is configured to generate at least one further operating voltage, wherein a third and a fourth monitoring unit are connected to the further operating voltage, the third monitoring unit actuating the first switching element (54) if the further operating voltage exceeds a third defined voltage value and the fourth monitoring unit actuating the second switching element (56) if the further operating voltage exceeds a fourth defined voltage value.

10. A method for monitoring a power supply unit (50) of a safety switching device (10) for switching on or switching off a technical installation (11) in a failsafe manner, comprising an input (24) for receiving an input signal, comprising a failsafe control/evaluation unit (28) that processes the input signal in order to generate an output signal for switching on or switching off the technical installation (11) in response thereto, wherein the power supply unit (50) has a ground connection (60) and receives an input voltage via a feed line (52) and provides a defined output voltage on an output side, **characterized by** a first and a second switching element (54, 56) being connected in series and connecting the input (58) of the power supply unit to the ground connection (60), and by an interrupter element (62) in the feed line (52) that triggers if the first and the second switching element (54, 56) are actuated simultaneously, wherein a reference point (64) is arranged between the first and the second switching element (54, 56) and a voltage value is read out at said reference point, wherein the voltage value is in the region of a first expectation value (66) in the case of a closed, low-impedance state of the first switching element (54) and in the case of an open state of the second switching element (56), and the voltage value is in the region of a second expectation value (68) in the case of an open state of the first switching element (54) and a closed, low-impedance state of the second switching element (56), with the safety switching device further comprising a control element (70) that selectively actuates the first or the second switching element (54, 56) and compares the voltage value at the reference point (64) with the first and second expectation value (66, 68) in order to test the operativeness of the first and second switching element.

## Revendications

1. Dispositif de commutation de sécurité (10) destiné à connecter ou déconnecter une installation technique (11) de manière protégée contre les défauts, comportant une entrée (24) destinée à recevoir un signal d'entrée, et comportant une unité de commande/évaluation (28) protégée contre les défauts qui traite le signal d'entrée afin de générer en fonction de celui-ci un signal de sortie destiné à connecter ou déconnecter l'installation technique (11), un bloc d'alimentation (50), comprenant une borne de masse (60) destinée à fournir au moins une tension de fonctionnement à l'unité de commande/évaluation (28), dans lequel le bloc d'alimentation (50) reçoit une tension d'entrée par l'intermédiaire d'une ligne d'alimentation (52) et délivre côté sortie une tension de sortie définie, **caractérisé en ce que** des premier et deuxième éléments de commutation (54, 56) relient de manière connectée en série l'entrée (58) du bloc d'alimentation à la borne de masse (60), et comportant un élément interrupteur (62), disposé dans la ligne d'alimentation (52), qui se déclenche lorsque les premier et deuxième éléments de commutation (54, 56) se trouvent dans un état fermé à faible résistance, dans lequel, entre les premier et deuxième éléments de commutation (54, 56) se trouve un point de référence (64) qui présente une valeur de tension correspondant à une première valeur attendue (66) dans l'état fermé à faible résistance du premier élément de commutation (54) et dans l'état ouvert du deuxième élément de commutation (56) et à une deuxième valeur attendue (68) dans l'état ouvert du premier élément de commutation (54) et dans l'état fermé à faible résistance du deuxième élément de commutation (56), dans lequel le dispositif de commutation de sécurité comporte en outre une unité de commande (70) qui est conçue pour actionner sélectivement le premier ou le deuxième élément de commutation (54, 56) et pour comparer la valeur de tension au point de référence (64) aux première et deuxième valeurs attendues (66, 68) afin de tester l'aptitude au fonctionnement des premier et deuxième éléments de commutation.

2. Dispositif de commutation de sécurité selon la revendication 1, **caractérisé par** une troisième valeur attendue (72) qui s'ajuste au point de référence (64) lorsque le premier élément de commutation (54) et le deuxième élément de commutation (56) sont dans l'état ouvert.

3. Dispositif de commutation de sécurité selon l'une des revendications 1 ou 2, **caractérisé en ce que** l'élément interrupteur (62) ne se déclenche pas lorsque seul le premier ou le deuxième élément de commutation (54, 56) est dans l'état fermé à faible impédance.

4. Dispositif de commutation de sécurité selon l'une des revendications 1 à 3, **caractérisé par** une première unité de surveillance (74) et une deuxième unité de surveillance (76) qui sont reliées à la tension de sortie, dans lequel la première unité de surveillance (74) actionne le premier élément de commutation (54) lorsque la tension de sortie dépasse une première valeur de tension définie, et la deuxième unité de surveillance (76) actionne le deuxième élément de commutation (56) lorsque la tension de sortie dépasse une deuxième valeur de tension définie.

5. Dispositif de commutation de sécurité selon la revendication 4, **caractérisé en ce que** les première et deuxième valeurs de tension définies sont réglables.

6. Dispositif de commutation de sécurité selon l'une des revendications 4 ou 5, **caractérisé par** une unité de commande (70) qui peut régler la première et/ou la deuxième unité de surveillance (74, 76) indépendamment de la tension de sortie instantanée.

7. Dispositif de commutation de sécurité selon l'une des revendications 1 à 6, **caractérisé en ce que** l'unité de commande/évaluation (28) protégée contre les défauts comprend au moins deux unités de traitement (28a, 28b) qui traitent le signal d'entrée de manière redondante l'une par rapport à l'autre et réalisent des combinaisons logiques de signaux afin de générer le signal de sortie en fonction de celles-ci.

8. Dispositif de commutation de sécurité selon la revendication 7, **caractérisé en ce que** lesdites au moins deux unités de traitement (28a, 28b) exigent des tensions de fonctionnement différentes.

9. Dispositif de commutation de sécurité selon l'une des revendications 1 à 8, **caractérisé en ce que** le bloc d'alimentation (50) est conçu pour générer au moins une autre tension de fonctionnement, dans lequel des troisième et quatrième unités de surveillance sont reliées à l'autre tension de fonctionnement et la troisième unité de surveillance actionne le premier élément de commutation (54) lorsque l'autre tension de fonctionnement dépasse une troisième valeur de tension définie et la quatrième unité de surveillance actionne le deuxième élément de commutation (56) lorsque l'autre tension de fonctionnement dépasse une quatrième valeur de tension définie.

10. Procédé de surveillance d'un bloc d'alimentation (50) d'un dispositif de commutation de sécurité (10) destiné à connecter ou déconnecter une installation technique (11) de manière protégée contre les défauts, comportant une entrée (24) destinée à recevoir un signal d'entrée, et comportant une unité de commande/évaluation (28) protégée contre les défauts qui traite le signal d'entrée afin de générer en fonction de celui-ci un signal de sortie destiné à connecter et à déconnecter l'installation technique (11), dans lequel le bloc d'alimentation (50) comporte une borne de masse (60) et reçoit une tension d'entrée par l'intermédiaire d'une ligne d'alimentation (52) et délivre côté sortie une tension de sortie définie, **caractérisé en ce que** des premier et deuxième éléments de commutation (54, 56) relient de manière connectée en série l'entrée (58) du bloc d'alimentation à la borne de masse (60), et comportant un élément interrupteur (62), disposé dans la ligne d'alimentation (52), qui se déclenche lorsque les premier et deuxième éléments de commutation (54, 56) sont actionnés simultanément, dans lequel, entre les premier et deuxième éléments de commutation (54, 56) se trouve un point de référence (64) sur lequel est lue une valeur de tension, dans lequel la valeur de tension se situe dans la plage d'une première valeur attendue (66) dans l'état fermé à faible résistance du premier élément de commutation (54) et dans l'état ouvert du deuxième élément de commutation (56) et dans lequel la valeur de tension se situe dans la plage d'une deuxième valeur attendue (68) dans l'état ouvert du premier élément de commutation (54) et dans l'état fermé à faible résistance du deuxième élément de commutation (56), dans lequel le dispositif de commutation de sécurité comporte en outre une unité de commande (70) qui actionne sélectivement le premier ou le deuxième élément de commutation (54, 56) et compare la valeur de tension au point de référence (64) aux première et deuxième valeurs attendues (66, 68) afin de tester l'aptitude au fonctionnement des premier et deuxième éléments de commutation.
